# DEMANDE DE BREVET EUROPEEN

(11) **EP 1 524 444 A1**
(43) Date de publication de la demande: **20.04.2005**
(21) Numéro de dépôt: 04105028.7
(22) Date de dépôt: 13.10.2004
(51) Int. Cl.: F16D 23/02

(54) **Bague de synchronisation**

(30) Priorité: 14.10.2003 FR 0350678
(71) Demandeur: Federal Mogul Operations France SAS, 45140 SAINT JEAN DE RUELLE (FR)
(72) Inventeur: Blanchard, Pierre, 38500 Coublevie (FR); Durand, Christophe, 38450 Vif (FR)
(74) Mandataire: de Beaumont, Michel

(57) **Abrégé**

L'invention concerne une bague de synchronisation comportant un alésage interne conique (14) muni de dents axiales acérées (16). La bague de synchronisation comprend des gorges (30) axiales réparties sur l'alésage interne conique, chaque gorge s'étendant sur une surface correspondant à au moins trois dents axiales consécutives, deux gorges successives étant séparées par au moins dix dents axiales.

## Description

La présente invention concerne une bague de synchronisation frittée du type utilisée dans les boîtes de vitesses.

Une boîte de vitesses classique comprend un arbre d'entrée et un arbre de sortie sur lesquels sont répartis des pignons d'engrenage. Chaque pignon porté par l'arbre d'entrée est généralement en permanence en prise avec un pignon porté par l'arbre de sortie. En l'absence d'engagement d'une vitesse, c'est-à-dire au point mort, l'un des pignons, appelé pignon fou, de chaque paire de pignons engrenés est libre en rotation par rapport à l'arbre associé.

La sélection d'un rapport de vitesse consiste à rendre l'un des pignons fous solidaire de l'arbre associé. Ceci est réalisé notamment au moyen d'un baladeur entraîné en rotation par l'arbre portant le pignon fou à sélectionner et comprenant des crabots adaptés à engrener avec des crabots du pignon fou pour le rendre solidaire de l'arbre. Pour que l'engagement des crabots du baladeur avec les crabots du pignon fou se produise de façon souple et sans à-coups, il est nécessaire que les vitesses de rotation du pignon et de l'arbre soient égalisées. On prévoit donc une bague de synchronisation adaptée à coopérer avec le pignon fou pour amener par friction progressivement le pignon fou à la même vitesse de rotation que la vitesse de rotation de l'arbre avant que les crabots du baladeur n'engagent les crabots du pignon fou.

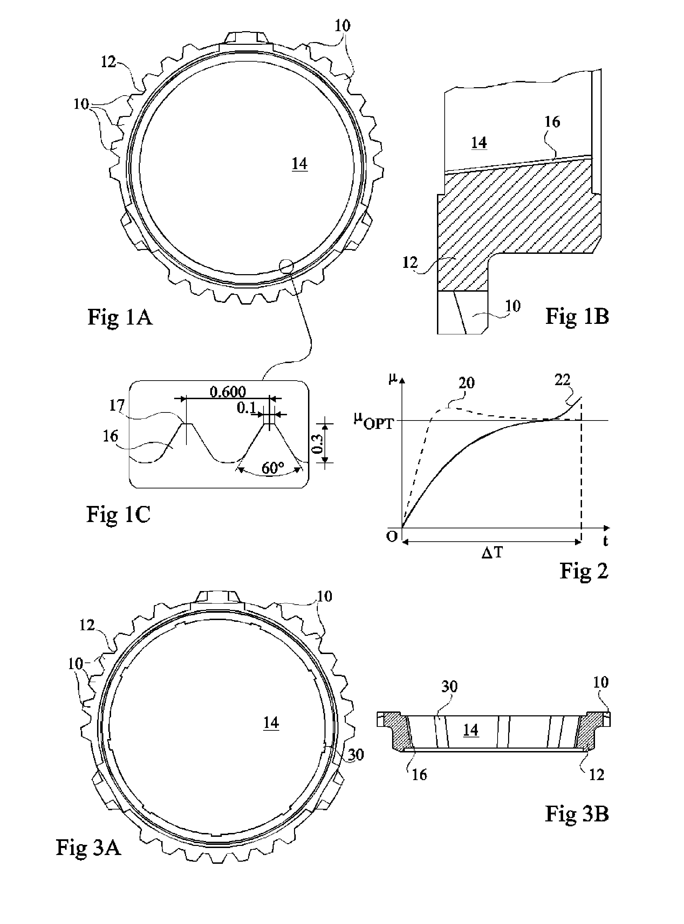

Les figures 1A et 1B sont respectivement une vue de face et une vue en coupe partielle agrandie d'une bague de synchronisation classique. La bague de synchronisation comprend des rampes 10 réparties sur son pourtour sur lesquelles s'applique l'effort de poussée du baladeur (non représenté) pendant la phase d'égalisation des vitesses. Comme cela est visible en figure 1B, les rampes 10 ne s'étendent que sur une partie de la hauteur de la bague et affleurent une extrémité de celle-ci. Par ailleurs, la bague comporte une zone périphérique amincie 12 qui se raccorde aux rampes 10.

La bague de synchronisation est munie d'un alésage central conique 14, le plus grand diamètre étant du côté des rampes 10, comme cela est visible à la figure 1B. L'alésage conique est destiné à coopérer avec une portée conique du pignon fou par translation axiale de la bague afin d'assurer une synchronisation rapide de la bague et du pignon par frottement jusqu'à égalisation des vitesses des parties coniques.

Il est connu d'utiliser le laiton, ou un alliage à base de laiton, pour la réalisation de la bague de synchronisation. En effet, le laiton permet l'obtention d'un coefficient de frottement convenable entre la bague de synchronisation et le pignon fou, notamment à la fin de l'étape de synchronisation.

Les pièces d'une boîte de vitesses sont généralement lubrifiées afin d'éviter l'usure et le grippage. Toutefois, la lubrification des parties coniques de la bague de synchronisation et du pignon sont incompatibles avec le souhait d'obtenir une synchronisation rapide de ces deux pièces l'une par rapport à l'autre.

Une solution classique utilisée pour améliorer la synchronisation de la bague de synchronisation et du pignon consiste à prévoir un filetage au niveau de l'alésage conique 14 de la bague de synchronisation. Un tel filetage permet une évacuation efficace de l'huile de lubrification lors du rapprochement de la bague de synchronisation et de la portée conique du pignon et permet une synchronisation plus rapide de la bague par rapport au pignon fou. Il est en outre également connu de compléter le filetage par des gorges axiales réparties au niveau de l'alésage conique.

Un inconvénient d'une telle bague de synchronisation est qu'elle requiert un procédé de fabrication relativement complexe. En effet, le filetage, qui offre de nombreuses surfaces en contre dépouille, ne peut pas être obtenu par une seule opération de moulage ou de frittage et doit donc être réalisé par une étape d'usinage supplémentaire, ce qui augmente le coût de fabrication de la bague. On cherche donc à définir une bague de synchronisation ayant une forme particulière permettant une réalisation en une seule opération de moulage ou de frittage.

Un autre inconvénient de la bague de synchronisation précédemment décrite en laiton ou en un alliage à base de laiton est que l'on observe une usure importante de la bague de synchronisation au niveau des crabots qui tend à réduire la durée de vie de la bague. Ceci est essentiellement dû aux propriétés de résistance mécanique du laiton ou de l'alliage à base de laiton utilisé. Il est donc souhaitable de pouvoir utiliser un matériau différent du laiton, ayant un coût de production inférieur au laiton, et ayant des propriétés de résistance mécanique améliorée pour la réalisation de la bague de synchronisation. Il serait souhaitable de pouvoir utiliser de l'acier pour la réalisation de la bague de synchronisation qui généralement a un coût de production inférieur au coût de production du laiton et qui a des propriétés de résistance mécanique améliorées.

Pour réaliser une bague de synchronisation en une seule opération de moulage ou de frittage, une possibilité est, comme cela est décrit dans la demande de brevet européen EP 0 965 769 déposée au nom de la demanderesse, de prévoir des dents axiales 16 régulièrement réparties sur la surface de l'alésage 14 comme cela est représenté aux figures 1B et 1C. En effet, les dents axiales 16 n'offrent aucune surface en contre dépouille et peuvent donc être obtenues par frittage ou moulage sans opération d'usinage supplémentaire. Pour obtenir des propriétés de frottement convenables permettant notamment l'utilisation d'un acier pour la réalisation de la bague de synchronisation, on prévoit des dents 16 acérées disposées dans le sens axial de la bague qui préviennent tout phénomène de grippage entre la bague et la portée conique du pignon.

La figure 2 représente des courbes d'évolution du coefficient de frottement µ entre la bague de synchronisation et la portée conique du pignon lors d'une étape de synchronisation de durée ΔT. La courbe en ligne pointillée 20 représente l'évolution souhaitée du coefficient de frottement lors d'une étape de synchronisation et correspond approximativement à l'évolution du coefficient de frottement pour une bague de synchronisation en laiton comprenant un alésage conique central fileté et une portée conique en acier. Pour une telle courbe, le coefficient de frottement µ augmente rapidement vers un coefficient de frottement optimal µ_{OPT} et se stabilise à cette valeur. Le coefficient de frottement optimal correspond à un compromis entre un coefficient de frottement suffisamment élevé pour permettre une synchronisation rapide et un coefficient pas trop élevé pour éviter tout grippage.

L'évolution du coefficient de frottement pour la bague de synchronisation représentée aux figures 1A à 1C, c'est-à-dire pour une bague de synchronisation en acier dont l'alésage central 14 comprend des dents axiales acérées 16, est représentée par la courbe en trait plein 22. On remarque que l'augmentation du coefficient de frottement jusqu'au coefficient optimal µ_{OPT} est plus lente que pour la courbe 20 et, qu'en fin de synchronisation, le coefficient de frottement tend à dépasser le coefficient optimal µ_{OPT}. On obtient donc, en fin de synchronisation, un phénomène sensiblement opposé à celui pouvant être observé avec une bague de synchronisation en acier avec un alésage interne fileté pour laquelle le coefficient de frottement tend à conserver une valeur inférieure au coefficient optimal µ_{OPT}.

Concernant la courbe 22, le retard que met le coefficient de frottement à atteindre le coefficient optimal µ_{OPT} se traduit par une synchronisation moins efficace de la bague et du pignon au début de la synchronisation, ce qui n'est pas souhaitable étant donné la faible durée de l'étape de synchronisation. En outre, la valeur atteinte par le coefficient de frottement à la fin de l'étape de synchronisation correspond au coefficient de frottement statique, ou coefficient d'adhérence, entre la bague de synchronisation et la portée conique du pignon, et est donc représentative des efforts qui devront être fournis ultérieurement pour séparer la bague de synchronisation de la portée conique du pignon. Il n'est donc pas souhaitable qu'une telle valeur soit trop élevée.

Un objet de la présente invention est d'obtenir une bague de synchronisation à dents axiales pour laquelle le coefficient de frottement entre la bague et un pignon fou se stabilise au niveau d'un coefficient de frottement optimal en fin de synchronisation.

Un autre objet de la présente invention est d'obtenir une bague de synchronisation pour laquelle le coefficient de frottement entre la bague et le pignon fou augmente rapidement vers le coefficient de frottement optimal au début de l'étape de synchronisation.

Pour atteindre ces objets, la présente invention prévoit une bague de synchronisation comportant un alésage interne conique muni de dents axiales acérées, et comprenant des gorges axiales réparties sur l'alésage interne conique, chaque gorge s'étendant sur une surface correspondant à au moins trois dents axiales consécutives, deux gorges successives étant séparées par au moins dix dents axiales.

Selon un autre mode de réalisation de l'invention, la section de chaque gorge est rectangulaire ou trapézoïdale.

Selon un autre mode de réalisation de l'invention, le nombre de gorges est supérieur ou égal à 6.

Selon un autre mode de réalisation de l'invention, les gorges sur la périphérie de la bague sont uniformément réparties sur l'alésage interne conique.

Selon un autre mode de réalisation de l'invention, les sommets des dents comportent un méplat de largeur inférieure à 0,2 millimètre.

Selon un autre mode de réalisation de l'invention, le pas des dents est inférieur à 0,7 millimètre.

Selon un autre mode de réalisation de l'invention, la hauteur des dents est inférieure à 0,4 millimètre.

Selon un autre mode de réalisation de l'invention, la bague de synchronisation est frittée.

Selon un autre mode de réalisation de l'invention, la bague de synchronisation est en acier.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A à 1C, précédemment décrites, sont respectivement une vue de face, une vue en coupe partielle, et une vue de détail d'une bague de synchronisation classique à dents axiales ;
la figure 2, précédemment décrite, représente l'évolution du coefficient de frottement entre une bague de synchronisation et un pignon fou lors d'une étape de synchronisation pour deux exemples de bagues ; et
les figures 3A et 3B sont respectivement une vue de face et une vue en coupe simplifiée d'un exemple de réalisation d'une bague de synchronisation selon l'invention.

La bague de synchronisation selon la présente invention comprend un alésage interne 14 comportant des dents acérées 16. En pratique, les sommets les plus acérés que l'on puisse obtenir comportent des méplats ou des arrondis qui dépendent de la technique de fabrication utilisée. Par un procédé de frittage, on peut obtenir des sommets qui comportent un méplat 17 inférieur à 0,2 millimètre, généralement de l'ordre de 0,1 millimètre. Dans l'exemple de bague représenté en figure 1C, les dents ont un pas de 0,6 millimètre et une hauteur de 0,3 millimètre. Ces dimensions sont bien entendu variables, mais on choisit généralement un méplat inférieur à 0,2 millimètre, un pas inférieur à 0,7 millimètre et une hauteur inférieure à 0,4 millimètre.

Selon la présente invention, on prévoit au niveau de l'alésage central conique 14, en plus des dents axiales 16, des gorges 30 qui s'étendent selon l'axe de l'alésage central conique 14. Dans un plan perpendiculaire à l'axe de la bague, chaque gorge 30 s'étend sur un arc de cercle dont la longueur est supérieure à la longueur d'un arc de cercle correspondant à au moins trois dents axiales 16 consécutives. A titre d'exemple, pour une bague de synchronisation ayant un alésage central conique 14 dont le diamètre moyen est d'environ 50 millimètres, chaque gorge 30 s'étend sur un arc de cercle dont la longueur est inférieure à la longueur d'un arc de cercle correspondant à une dizaine de dents axiales 16 consécutives. Bien entendu, la limite supérieure de la longueur de l'arc de cercle sur lequel s'étend chaque gorge 30 dépend du diamètre moyen de l'alésage central conique 14 de la bague de synchronisation. La section des gorges 30, dans un plan perpendiculaire à l'axe de la bague de synchronisation est par exemple rectangulaire, trapézoïdale, en forme de "V", de "U", etc. Les sections des gorges 30 sont, de préférence, identiques. Le nombre de gorges 30 et leur position relative varient en fonction des efforts exercés sur les crabots 10, notamment pendant une étape de synchronisation. Toutefois, deux gorges 30 successives sont au moins séparées par dix dents axiales 16. Dans l'exemple de réalisation représenté en figure 3A, neuf gorges 30 sont représentées uniformément réparties sur la circonférence de l'alésage central conique 14. De préférence, la bague de synchronisation à dents axiales 16 selon l'invention comporte au moins six gorges 30.

La demanderesse a mis en évidence que la présence des gorges 30 permet de retenir une certaine quantité d'huile pour qu'un film d'huile suffisant se maintienne à la fin d'une étape de synchronisation entre les dents 16 de la bague de synchronisation et la portée conique du pignon fou de façon à éviter une augmentation brutale du coefficient de frottement entre la bague de synchronisation et le pignon fou. Le coefficient de frottement tend alors à rester, à la fin de l'étape de synchronisation, sensiblement constant et égal au coefficient de frottement optimal µ_{OPT}.

La demanderesse a également mis en évidence que la présence de gorges axiales 30, associées aux dents axiales 16, permet une meilleure évacuation du film d'huile au début de l'étape de synchronisation, entraînant une augmentation plus rapide du coefficient de frottement vers le coefficient de frottement optimal µ_{OPT}.

La présence des gorges 30 permet donc de modifier la courbe d'évolution du coefficient de frottement 22 représentée en figure 2 pour le faire tendre vers la courbe optimale 20.

La bague de synchronisation selon la présente invention peut avantageusement être réalisée en un acier ayant des propriétés de résistance mécanique améliorée par rapport aux propriétés de résistance mécanique du laiton de façon à augmenter la durée de vie de la bague.

Une bague de synchronisation selon l'invention sera de préférence frittée. En effet, la forme des gorges 30 peut être choisie de façon qu'elles ne présentent pas de contre dépouille ce qui permet d'obtenir une bague terminée en une seule étape de fabrication.

## Revendications

1. Bague de synchronisation comportant un alésage interne conique (14) muni de dents axiales acérées (16), **caractérisée en ce qu'**elle comprend des gorges (30) axiales réparties sur l'alésage interne conique, chaque gorge s'étendant sur une surface correspondant à au moins trois dents axiales consécutives, deux gorges successives étant séparées par au moins dix dents axiales.

2. Bague de synchronisation selon la revendication 1, dans laquelle la section de chaque gorge (30) est rectangulaire ou trapézoïdale.

3. Bague de synchronisation selon la revendication 1, dans laquelle le nombre de gorges (30) est supérieur ou égal à 6.

4. Bague de synchronisation selon la revendication 1, dans laquelle les gorges (30) sur la périphérie de la bague sont uniformément réparties sur l'alésage interne conique (14).

5. Bague de synchronisation selon la revendication 1, dans laquelle les sommets des dents (16) comportent un méplat (17) de largeur inférieure à 0,2 millimètre.

6. Bague de synchronisation selon la revendication 1, dans laquelle le pas des dents (16) est inférieur à 0,7 millimètre.

7. Bague de synchronisation selon la revendication 1, dans laquelle la hauteur des dents (16) est inférieure à 0,4 millimètre.

8. Bague de synchronisation selon l'une quelconque des revendications précédentes, **caractérisée en ce qu'**elle est frittée.

9. Bague de synchronisation selon l'une quelconque des revendications précédentes, **caractérisée en ce qu'**elle est en acier.
